# EUROPEAN PATENT SPECIFICATION

(11) **EP 2 051 511 B1**
(45) Date of publication and mention of the grant of the patent: **28.03.2012**
(21) Application number: 08018258.7
(22) Date of filing: 17.10.2008
(51) Int. Cl.: H04N 5/50, H04N 21/433, H04N 21/414, H04N 21/438

(54) **Broadcast reception mobile terminal**
Mobiles Rundfunkempfangs-Endgerät
Terminal mobile de réception de diffusion

(30) Priority: 17.10.2007 KR 20070104720
(43) Date of publication of application: 22.04.2009
(73) Proprietor: LG Electronics Inc., Yeongdeungpo-gu Seoul 150-721 (KR)
(72) Inventor: Cho, Beom-Seok, Dongjak-Gu Seoul (KR)
(74) Representative: Katérle, Axel

(56) References cited:
- EP-A- 1 185 087
- EP-A1- 1 746 733
- WO-A-2007/053734
- WO-A1-2005/075603
- US-A1- 2004 001 500
- US-A1- 2006 085 828
- US-A1- 2007 067 815

## Description

### BACKGROUND OF THE INVENTION

### Field of the Invention

The present invention relates to a mobile terminal and corresponding method for receiving a digital multimedia broadcast.

### Description of the Related Art

Analog broadcasting, which is currently being used, was originally developed for reception by a fixed terminal. Accordingly, when a user receives audio broadcast signals while walking or driving a vehicle, the sound quality of the audio broadcast signals are significantly lowered. Therefore, a higher level output and a wider frequency band are required.

Further, digital audio broadcasting technologies are now being used in place of the related art analog broadcasting. Examples of such digital audio broadcasting technologies include the Digital Audio Broadcasting (DAB) system in Europe (where Eureka-147 has been adopted as the DAB standard), the Digital Audio Radio (DAR) system in the United States, the Digital Radio Broadcasting (DRB) system in Canada, the Digital Sound Broadcasting (DSB) system in the International Telecommunication Union (ITU-R), and the Digital Multimedia Broadcasting (DMB) system in Korea. The above-noted digital audio broadcasting techniques are sufficiently robust to operate properly even in an environment with high levels of noise and signal interference, such as in urban downtown areas.

Therefore, even if signals are transmitted with a low output level, signals carrying audio data with CD level quality can be received in a moving vehicle. Further, the concept of audio or radio broadcasting has been expanded to include visual data. Thus, in addition to music broadcasting, a variety of multimedia data, such as news reports, weather and traffic information, geographic and location information, video information, and the like, can be transmitted via broadcast signals.

In addition, digital broadcasting generally provides a better sound quality than existing AM and FM radio broadcasts, and also provides various data services (including text, graphics, video, etc.) at a data transmission rate of about 1.5 Mbits/sec. The digital broadcasting systems also support bi-directional services that allow user interactions. Therefore, broadcasting terminals such as a broadcasting mobile terminal can now receive broadcast programs, sporting events, etc. and the user is able to view such broadcast programs while on the move. However, there is often a delay in a broadcast program when the user changes channels, views other information, etc.

US 2007/0067815 A1 describes a mobile TV channel switching system and a respective method. A mobile TV device is described, wherein a newly requested channel is displayed before the mobile TV device is retuned to the newly selected channel. Hence, data from multiple channels is buffered in a buffer within the mobile TV device while a demodulator is cycled on. The mobile TV device displays data from one of the buffered channels upon a request to switch channels. The mobile TV device is then retuned to the newly selected channel at the next instance the demodulator and tuner are cycled on.

EP 1 185 087 A2 describes a digital TV channel surfing system. A digital TV receiver decoding multiple programs concurrently to reduce the amount of time needed to display an adjacent channel includes a single transport decoder and a single video/audio decoder. The transport decoder decodes multiple transport streams in a single channel, wherein each transport stream represents a respectively different minor channel transmitted in a major channel. At a channel change, the video/audio decoder selects the next transport stream that is provided by the transport decoder. Alternatively, the video/audio decoder can buffer and concurrently decode multiple program streams. Further, the TV receiver can include multiple tuners.

US 2006/0085828 A1 describes a method to speed up a channel change. The method comprises receiving a plurality of television channels and storing channel information. Upon selection of the stored channel, the stored channel information is accessed for display. The storage may be updated to maintain a specific most recently received frame and subsequent MPEG signals of the stored channel. Accordingly, it is not necessary to wait for the next specific frame to display a newly selected channel.

US 2004/0001500 A1 uses predictive tuning to avoid a tuning delay. The use of data compression techniques has the drawback that a certain amount of data must be received before the respective data could be displayed. Therefore, a noticeable delay results. To avoid this delay, the data of several channels is buffered so that a request to change to a buffered channel results in an immediate presentation of buffered data.

WO 2007/053734 A2 describes a method for delay-less channel switching, wherein memory space is allocated in a buffer memory to each of a user's favorite TV channels. Each allocated memory space is updated with a corresponding burst of newly received data. In response to a command indicating selection of a new favorite TV channel, a sufficient amount of data is retrieved from the memory space allocated to the newly selected favorite TV channel to ensure that the user experiences minimal delay in changing to the new favorite TV channel.

### SUMMARY OF THE INVENTION

One object of the present invention is to provide a mobile terminal and corresponding method for reducing a broadcasting time delay time when the user changes a channel.

To achieve this object, the present invention provides in one aspect a mobile terminal as defined by independent claim 1.

In another aspect, the present invention provides a method of controlling a mobile terminal as defined by independent claim 7.

Preferred embodiments of the mobile terminal and the method for controlling the mobile terminal are defined by the dependent claims.

Further scope of applicability of the present invention will become apparent from the detailed description given hereinafter. However, it should be understood that the detailed description and specific examples, while indicating preferred embodiments of the invention, are given by illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings, which are given by illustration only, and thus are not limitative of the present invention, and wherein:

FIG. 1 is a block diagram illustrating a mobile terminal according to an embodiment of the present invention;

FIG. 2 is a front perspective view of a mobile terminal according to an embodiment of the present invention;

FIG. 3 is a rear perspective view of the mobile terminal illustrated in FIG. 2;

FIG. 4 is a flowchart illustrating a method of changing channels in a mobile terminal according to an embodiment of the present invention;

FIG. 5 is an overview illustrating a channel buffering or switching setup screen in a mobile terminal according to an embodiment of the present invention;

FIG. 6 is a flowchart illustrating a method of changing broadcast channels based on user preferences according to an embodiment of the present invention;

FIG. 7 is a flowchart illustrating a method of changing broadcast channels in a mobile terminal according to another embodiment of the present invention;

FIG. 8 is a view illustrating a screen of a mobile terminal according to an embodiment of the present invention; and

FIG. 9 is a flowchart illustrating a method of changing broadcast channels in a mobile terminal according to still another embodiment of the present invention.

### DETAILED DESCRIPTION OF THE INVENTION

Reference will now be made in detail to the preferred embodiments of the present invention, examples of which are illustrated in the accompanying drawings.

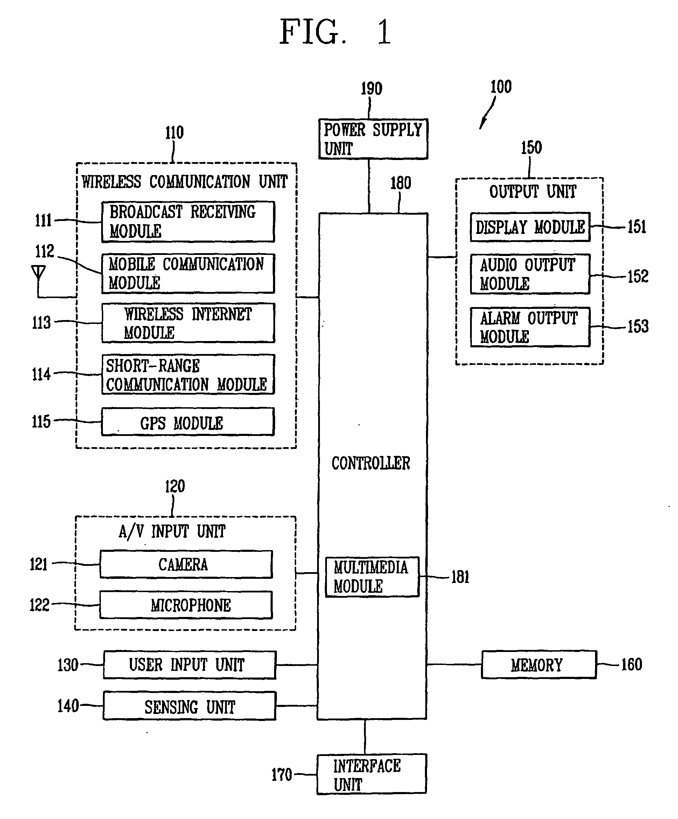

FIG. 1 is a block diagram of a mobile terminal 100 according to an embodiment of the present invention. As shown, the mobile terminal 100 includes a wireless communication unit 110 having one or more components which permits wireless communication between the mobile terminal 100 and a wireless communication system or network within which the mobile terminal is located.

For example, the wireless communication unit 110 includes a broadcast receiving module 111 that receives a broadcast signal and/or broadcast associated information from an external broadcast managing entity via a broadcast channel. The broadcast channel may include a satellite channel and a terrestrial channel.

In addition, the broadcast managing entity generally refers to a system which transmits a broadcast signal and/or broadcast associated information. Examples of broadcast associated information include information associated with a broadcast channel, a broadcast program, a broadcast service provider, etc. For instance, broadcast associated information may include an electronic program guide (EPG) of digital multimedia broadcasting (DMB) and electronic service guide (ESG) of digital video broadcast-handheld (DVB-H).

In addition, the broadcast signal may be implemented as a TV broadcast signal, a radio broadcast signal, and a data broadcast signal, among others. The broadcast signal may further include a broadcast signal combined with a TV or radio broadcast signal.

The broadcast receiving module 111 is also configured to receive broadcast signals transmitted from various types of broadcast systems. For example, such broadcasting systems include the digital multimedia broadcasting-terrestrial (DMB-T) system, the digital multimedia broadcasting-satellite (DMB-S) system, the digital video broadcast-handheld (DVB-H) system, the data broadcasting system known as media forward link only (MediaFLO®) and the integrated services digital broadcast-terrestrial (ISDB-T) system among others. Receiving multicast signals is also possible. Further, data received by the broadcast receiving module 111 may be stored in a suitable device, such as a memory 160.

The wireless communication unit 110 also includes a mobile communication module 112 that transmits/receives wireless signals to/from one or more network entities (e.g., base station, Node-B). Such signals may represent audio, video, multimedia, control signaling, and data, among others.

Also included is a wireless Internet module 113 that supports Internet access for the mobile terminal. The module 113 may be internally or externally coupled to the terminal. The wireless communication unit 110 also includes a short-range communication module 114 that facilitates relatively short-range communications. Suitable technologies for implementing this module include radio frequency identification (RFID), infrared data association (IrDA), ultra-wideband (UWB), as well at the networking technologies commonly referred to as Bluetooth and ZigBee, to name a few.

A position-location module 115 is also included in the wireless communication unit 110 and identifies or otherwise obtains the location of the mobile terminal 100. The position-location module 115 may be implemented using global positioning system (GPS) components which cooperate with associated satellites, network components, and combinations thereof.

In addition, as shown in FIG. 1, the mobile terminal 100 also includes an Audio/video (A/V) input unit 120 that provides audio or video signals to the mobile terminal 100. As shown, the AN input unit 120 includes a camera 121 and a microphone 122. The camera 121 receives and processes image frames of still pictures or video.

Further, the microphone 122 receives an external audio signal while the portable device is in a particular mode, such as a phone call mode, recording mode and voice recognition mode. The received audio signal is then processed and converted into digital data. Also, the portable device, and in particular, the AN input unit 120, typically includes assorted noise removing algorithms to remove noise generated in the course of receiving the external audio signal. In addition, data generated by the AN input unit 120 may be stored in the memory 160, utilized by an output unit 150, or transmitted via one or more modules of the communication unit 110. If desired, two or more microphones and/or cameras may be used.

The mobile terminal 100 also includes a user input unit 130 that generates input data responsive to user manipulation of an associated input device or devices. Examples of such devices include a keypad, a dome switch, a touchpad (e.g., static pressure/capacitance), a jog wheel and a jog switch. A specific example is one in which the user input unit 130 is configured as a touchpad in cooperation with a touch screen display, which will be described in more detail below.

Also, various types of touch sensitive technologies may be used. In addition, the direction of the user's finger(s), a stylus, or other object(s) placed in direct contact with the screen can be performed. Further, proximity detection may be used, whereby the user's finger(s) or object is detected when place near the screen without having to contact with the screen itself. Also, the touch pad (or other touch sensitive membrane) may be combined onto the display 151 to thus form a touch screen, which allows for both user inputs via touching and provides visual outputs.

A sensing unit 140 is also included in the mobile terminal 100 and provides status measurements of various aspects of the mobile terminal 100. For instance, the sensing unit 140 may detect an open/close status of the mobile terminal 100, relative positioning of components (e.g., a display and keypad) of the mobile terminal 100, a change of position of the mobile terminal 100 or a component of the mobile terminal 100, a presence or absence of user contact with the mobile terminal 100, orientation or acceleration/deceleration of the mobile terminal 100, etc.

As an example, when the mobile terminal 100 is a slide-type mobile terminal, the sensing unit 140 may sense whether a sliding portion of the mobile terminal 100 is open or closed. Other examples include the sensing unit 140 sensing the presence or absence of power provided by a power supply 190, the presence or absence of a coupling or other connection between an interface unit 170 and an external device, etc.

Further, the interface unit 170 is often implemented to couple the mobile terminal 100 with external devices. Typical external devices include wired/wireless headphones, external chargers, power supplies, storage devices configured to store data (e.g., audio, video, pictures, etc.), earphones, and microphones, among others. In addition, the interface unit 170 may be configured using a wired/wireless data port, a card socket (e.g., for coupling to a memory card, a subscriber identity module (SIM) card, a user identity module (UIM) card, a removable user identity module (RUIM) card, etc.), audio input/output ports and video input/output ports.

The output unit 150 generally includes various components which support the output requirements of the mobile terminal 100. The mobile terminal 100 also includes a display 151 that visually displays information associated with the mobile terminal 100. For instance, if the mobile terminal 100 is operating in a phone call mode, the display 151 will generally provide a user interface or graphical user interface which includes information associated with placing, conducting, and terminating a phone call. As another example, if the mobile terminal 100 is in a video call mode or a photographing mode, the display 151 may additionally or alternatively display images which are associated with these modes.

Further, the display 151 also preferably includes a touch screen working in cooperation with an input device, such as a touchpad. This configuration permits the display 151 to function both as an output device and an input device. In addition, the display 151 may be implemented using display technologies including, for example, a liquid crystal display (LCD), a thin film transistor-liquid crystal display (TFT-LCD), an organic light-emitting diode display (OLED), a flexible display and a three-dimensional display. The display 151 also provides a user interface (UI) or graphic user interface (GUI).

The mobile terminal 100 may also include one or more of such displays. An example of a two-display embodiment is one in which one display is configured as an internal display (viewable when the terminal is in an opened position) and a second display configured as an external display (viewable in both the open and closed positions).

FIG. 1 further shows the output unit 150 having an audio output module 152 which supports the audio output requirements of the mobile terminal 100. The audio output module 152 is often implemented using one or more speakers, buzzers, other audio producing devices, and combinations thereof.

Further, the audio output module 152 functions in various modes including a call-receiving mode, a call-placing mode, a recording mode, a voice recognition mode and a broadcast reception mode. During operation, the audio output module 152 outputs audio relating to a particular function (e.g., call received, message received, and errors).

In addition, the output unit 150 is further shown having an alarm 153, which is used to signal or otherwise identify the occurrence of a particular event associated with the mobile terminal 100. Typical events include a call received, a message received and user input received. An example of such output includes the providing of tactile sensations (e.g., vibration) to a user. For instance, the alarm 153 may be configured to vibrate responsive to the mobile terminal 100 receiving a call or message.

As another example, a vibration is provided by the alarm 153 responsive to receiving user input at the mobile terminal 100, thus providing a tactile feedback mechanism. Further, the various outputs provided by the components of the output unit 150 may be separately performed, or such output may be performed using any combination of such components.

In addition, the memory 160 is generally used to store various types of data to support the processing, control, and storage requirements of the mobile terminal 100. Examples of such data include program instructions for applications operating on the mobile terminal 100, call history, contact data, phonebook data, messages, pictures, video, etc.

Further, the memory 160 shown in FIG. 1 may be implemented using any type or combination of suitable volatile and non-volatile memory or storage devices including random access memory (RAM), static random access memory (SRAM), electrically erasable programmable read-only memory (EEPROM), erasable programmable read-only memory (EPROM), programmable read-only memory (PROM), read-only memory (ROM), magnetic memory, flash memory, magnetic or optical disk, card-type memory, or other similar memory or data storage device.

The terminal 100 also includes a controller 180 that typically controls the overall operations of the mobile terminal 100. For instance, the controller 180 performs the control and processing associated with voice calls, data communications, instant message communications, video calls, camera operations and recording operations. As shown in FIG. 1, the controller 180 may also include a multimedia module 181 for providing multimedia playback functions. The multimedia module 181 may be configured as part of the controller 180, or may be implemented as a separate component.

In addition, a power supply 190 provides power used by the various components for the portable device. The provided power may be internal power, external power, or combinations thereof.

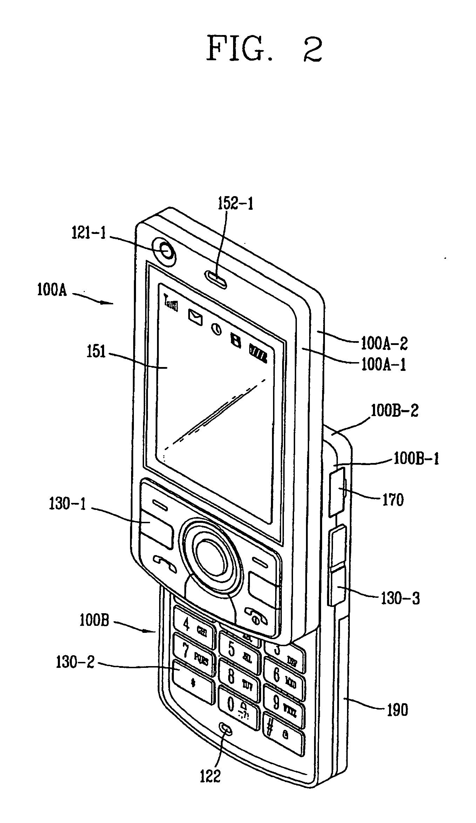

FIG. 2 is a perspective view of a front side of the mobile terminal in accordance with the one embodiment of the present invention. As shown, the mobile terminal includes a first body 100A, and a second body 100B configured to slidably cooperate with the first body 100A in at least one direction.

In addition, the first body 100A is positioned over the second body 100B in a manner that the second body 100B is obscured by the first body 100A. This state can be referred to as a closed configuration (position). Also, the state where the first body 100A exposes at least part of the second body 100B can be referred to as an open configuration (position).

The mobile terminal may be operable in a standby mode when in the closed position, and this mode can be released by the user's manipulation. Also, the mobile terminal may typically be operable in an active (phone call) mode in the open configuration. This mode may also be changed according to the user's manipulation or after lapse of a certain time.

In addition, a case (housing, casing, cover, etc.) forming the outside of the first body 100A is formed by a first front case 100A-1 and a first rear case 100A-2. Various electronic components may be disposed in a space between the first front case 100A-1 and the first rear case 100A-2. One or more intermediate cases may additionally be disposed between the first front case 100A-1 and the first rear case 100A-2.

The cases can be formed of resin in a manner of injection molding, or formed using metallic materials such as stainless steel (STS) and titanium (Ti). Also, a display 151, a first audio output module 152-1, a first camera 121-1 and a first user input unit 130-1 are disposed at the first front case 100A-1 of the first body 100A. The display 151 includes a Liquid Crystal Display (LCD), an Organic Light Emitting Diodes (OLED), and the like, which can visibly display information.

In addition, the display 151 and a touchpad can be layered with each other such that the display 151 can be configured to function as a touch screen so as to allow a user to input information in a touching manner. Further, the first audio output module 152-1 may be implemented as a speaker, and the first camera 121-1 may be implemented to be suitable for a user to capture still images or video.

Similar to the first body 100A, a case configuring the outside of the second body 100B is formed by a second front case 100B-1 and a second rear case 100B-2. The second user input unit 130-2 is disposed at the second body 100B, and in more detail, at a front face of the second front case 100B-1. A third user input unit 130-3, a microphone 122 and an interface unit 170 are also disposed at either the second front case 100B-1 or the second rear case 100B-2.

Further, the first to third user input units 130-1, 130-2 and 130-3 may be referred to as the user input unit 130. Any tactile manner that allows the user to touch and manipulate various key, buttons, etc. can be employed for the user input unit 130. For example, the user input unit 130 can be implemented as dome switches or a touch pad by which the user inputs information in a pushing, pressing or touching manner, or implemented by using mechanical elements, such as a moveable wheel (or disk), a jog or a joystick, rotatable keys, and the like.

In terms of functions, the first user input unit 130-1 is used for entering commands, such as 'start', 'end', 'scroll' or the like, and the second user input unit 130-2 is used for entering numbers, characters, symbols, or the like. Also, the third user input unit 130-3 can be operated as a hot key for activating a specific function in the mobile terminal.

In addition, the microphone 122 may be implemented to be suitable for receiving user's voice or various sounds. The interface unit 170 may be used as a passage through which the terminal can exchange data or the like with an external device. For example, the interface unit 170 may be implemented as one of a wired/wireless connection port for connecting an earphone to the mobile terminal, a port for short-range communications (e.g., an Infrared Data Association (IrDA) port, a Bluetooth^{™} port, a wireless LAN port, etc.), a power supply port for providing power to the external device, or the like.

In addition, the interface unit 170 can be a card socket for receiving an external card, such as a Subscriber Identity Module (SIM), a User Identity Module (UIM), a memory card for storing information, or the like. A power supply 190 is also disposed at a side of the second rear case 100B-2 to provide power to the mobile terminal. The power supply 190 may be a rechargeable battery, for example, to be attachable/detachable for charging.

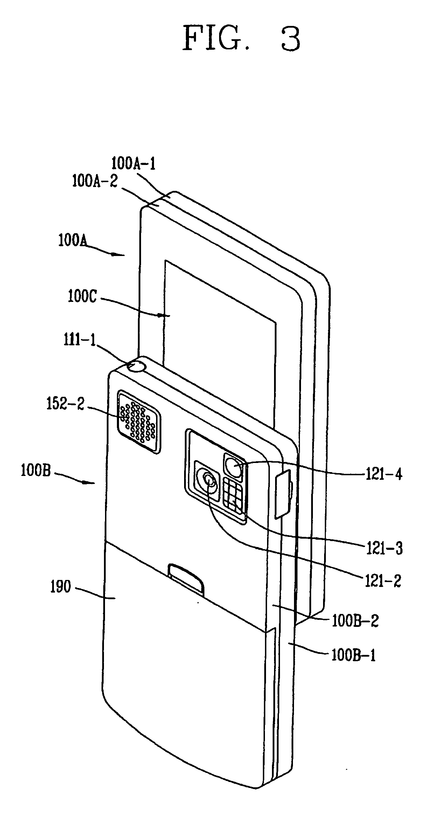

Next, FIG. 3 is a rear view of the mobile terminal according to one embodiment of the present invention. As illustrated in FIG. 3, a second camera 121-2 is additionally disposed at a rear face of the second rear case 100B-2 of the second body 100B. Further, the second camera 121-2 faces a direction which is opposite to a direction faced by the first camera 121-1 (see Fig. 1), and may have different pixels from those of the first camera 121-1.

For example, the first camera 121-1 may operate with relatively lower pixels (lower resolution). Thus, the first camera 121-1 may be useful when a user captures his or her face and send it to another party during a video call or the like. On the other hand, the second camera 121-2 may operate with relatively higher pixels (higher resolution) such that it can be useful for a user to obtain higher quality pictures for later use.

In addition, A flash 121-3 and a mirror 121-4 are additionally disposed adjacent to the second camera 121-2. The flash 121-3 operates in conjunction with the second camera 121-2 when taking a picture using the second camera 121-2, and the mirror 121-4 cooperates with the second camera 121-2 to allow a user to photograph himself in a self-portrait mode.

Also, the second rear case 100B-2 includes a second audio output module 152-2 that cooperates with the first audio output module 152-1 (see FIG. 2) to provide stereo output. Also, the second audio output module 152-2 may be configured to operate as a speakerphone. Further, a broadcast signal receiving antenna 111-1 is disposed at one side of the second rear case 100B-2, in addition to a mobile communications antenna. The antenna 111-1 can also be configured to retract into the second body 100B.

Further, one part of a slide module 100C, which allows the first body 100A to be slidably coupled to the second body 100B, is disposed at the first rear case 100A-2 of the first body 100A. The other part of the slide module 111-1 is disposed at the second front case 100B-1 of the second body 100B, such that it is not exposed as illustrated in the drawing of the present invention. As such, the second camera 121-2 is disposed at the second body 100B; however, the present invention is not limited to the configuration.

For example, it is also possible that one or more of those components (e.g., 111-1, 121-2-121-3, 152-2, etc.), which have been described to be implemented on the second rear case 100B-2, such as the second camera 121-2, is implemented on the first body 100A, particularly, on the first rear case 100A-2. In this configuration, the component(s) disposed on the first rear case 100A-2 can be protected by the second body 100B in a closed position of the mobile terminal. In addition, if there is no second camera 121-2, the first camera 121-1 can be implemented to be rotatable or otherwise moveable in order to capture images from various directions.

In addition, the mobile terminal 100 of Figs. 1-3 may be configured to operate within a communication system which transmits data via frames or packets, including both wireless and wireline communication systems, and satellite-based communication systems. Such communication systems utilize different air interfaces and/or physical layers.

Examples of such air interfaces utilized by the communication systems include, for example, frequency division multiple access (FDMA), time division multiple access (TDMA), code division multiple access (CDMA), and universal mobile telecommunications system (UMTS), the long term evolution (LTE) of the UMTS, and the global system for mobile communications (GSM). By way of a non-limiting example only, further description will relate to a CDMA communication system, but such teachings apply equally to other system types.

In addition, a broadcast reception mobile terminal requires about 3-4 seconds to change channels. In order to reduce such delay in changing channels, the mobile terminal according to embodiments of the present invention pre-buffers some broadcast signals (e.g., an amount of approximately 3-4 seconds) of one or more specific channel while a user watches a broadcast of a different channel. Thus, when the user change channels, such buffered contents of the one or more specific channel are displayed on the screen.

Further, the mobile terminal may automatically or upon user selection buffer or otherwise temporarily store the contents of adjacent channels, namely, one preceding channel and one succeeding channel relative to the channel which the user is currently watching. Alternatively, the mobile terminal may buffer other channels, such as those that the user has set as being preferred channels, to allow the buffered channels to be displayed faster upon performing a channel changing operation.

In addition, the buffer can be updated automatically, updated in a periodic manner, updated in specific situations, or updated upon occurrence of certain events. For example, if a channel change operation is not detected for a certain amount of time (e.g., 5 seconds), the temporarily buffered contents may be discarded, erased or written over with more recent contents. Such continued buffering and updating of buffered contents can also be displayed such that the user would notice minimal delays while changing channels.

Further, various types of content buffering techniques may be used according to embodiments of the present invention. For example, the contents of one or more adjacent channels, user preferred channels or other channels that are desired for buffering may use a time window or some specified time period during which the contents are buffered. For example, a 5 second window or some particular time period corresponding to the channel changing time delay amount can be used to buffer the desired contents, which can later be displayed such that the user would notice only minimal delays when changing channels.

Alternatively, one or more still images related to the contents of one or more adjacent channels, user preferred channels or other channels or images having some other characteristics, such as advertisements, announcements, or other visual information may be displayed during a channel changing operation such that the user notices minimal delays or image disruptions when changing channels.

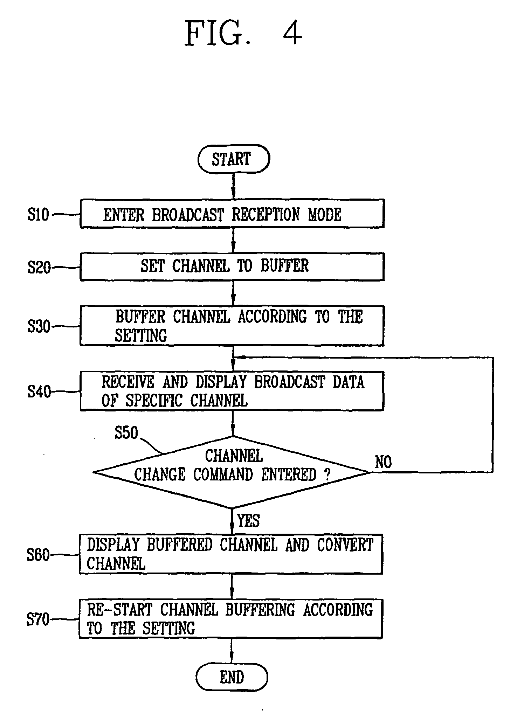

Next, Fig. 4 is a flowchart illustrating a method of changing broadcast channels in a mobile terminal according to one embodiment of the present invention. Referring to Fig. 4, when the mobile terminal enters a broadcast reception mode (S10), the user can activate a channel buffering (switching) setup screen or some other type of user interactive screen interface. The user can then set or select one or more particular channels to be buffered using the setup screen (S20).

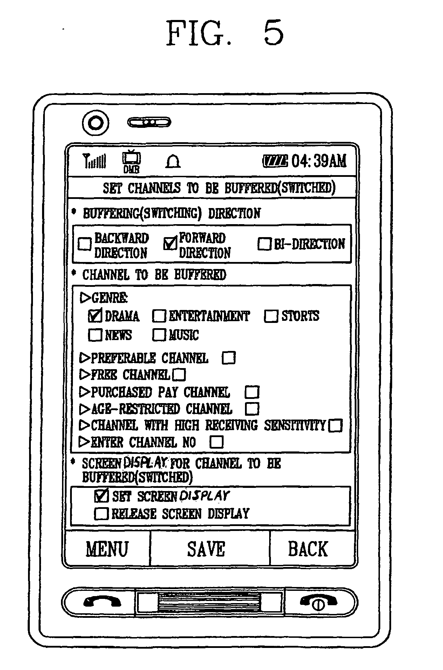

For example, FIG. 5 is an overview illustrating a channel buffering (switching) setup screen of the mobile terminal according to an embodiment of the present invention. As shown in FIG. 5, one embodiment of the present invention allows the user to set certain factors when switching (buffering) channel contents. For example, the user can set a channel buffering direction (i.e., previous or subsequent channels among sequential channels, etc.), whether or not a certain channel is authorized for viewing (e.g., viewer age restricted channels, channel reception state or conditions, pay-per-view channels, etc.) and the like. Further, although embodiments of the present invention are described with two channels being buffered, multiple channel buffering is also possible.

Further, in FIG. 4, step S20 for setting channels to be buffered is performed after step S10 for entering the broadcast reception mode. However, the present invention is not limited to this, and the user can set channels to be buffered by activating the channel buffering setup screen before or regardless of whether the mobile terminal enters the broadcast reception mode.

In addition, as shown in FIG. 4, after the user sets the desired channels to be buffered, the controller 180 buffers the set channel or channels according to the setting (S30) and also receives and displays the broadcast data of a particular channel such as a channel most recently watched (e.g., channel 5) (S40). Further, in one example, the amount of buffered broadcast data may be sufficient for displaying the data during about 3-4 seconds.

In addition, while the broadcast data of the particular channel (e.g., channel 5 in this example) is being displayed, and the user enters a channel change command (e.g., a channel up or channel down command) (Yes in S50), the controller 180 changes the currently watched channel (i.e., Channel 5) to another channel (e.g., Channel 6) according to the user's channel change command.

Also, while the broadcast channel is changed from Channel 5 to Channel 6, the controller 180 displays the pre-buffered broadcast data related to Channel 6 on a screen of the terminal (S60). In addition, after the broadcast channel is completely changed from Channel 5 to Channel 6, the controller 180 restarts the channel buffering operation in step S20 (S70).

### Channel Change in consideration of Channel Buffering Direction

In the setup step S20, the user may set the direction in which a channel is to be buffered so as to designate a channel to buffer. That is, the user can set whether to buffer upper and lower adjacent channels with respect to the channel currently being broadcast (such as Channel 5) (i.e., bi-directional buffering), whether to buffer the upper or preceding channel (i.e., forward direction buffering), or whether to buffer the lower or succeeding channel (i.e., backward direction buffering).

Then, if the direction to buffer a channel is set to the forward direction, the controller 180 buffers two channels (i.e., Channel 4 and Channel 3) in the upper direction of the current broadcast channel (i.e., Channel 5). Then, when the user enters a channel change command to change from Channel 5 to Channel 4, the controller 180 displays the buffered broadcast data of Channel 4 while the current broadcast channel is being changed from Channel 5 to Channel 4. Afterwards, when the broadcast channel is completely changed from Channel 5 into Channel 4, the controller 180 can start buffering two channels in the upper direction (i.e. Channels 3 and 2) of the current broadcast channel (i.e., Channel 4).

### Channel Change considering User Preferences

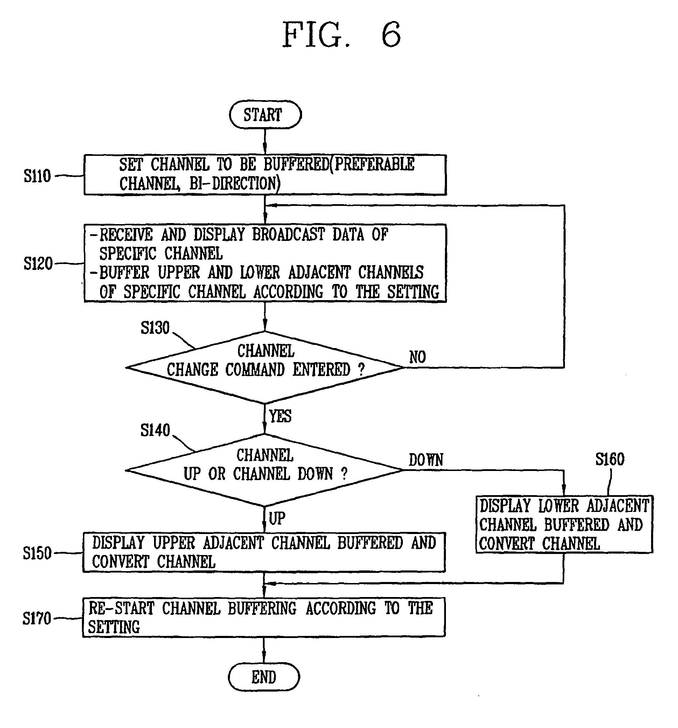

FIG. 6 is a flowchart illustrating a method of changing channels based on a user's preference according to an embodiment of the present invention. As illustrated in FIG. 6, the user can set their preferred channels (e.g., Channels 1, 2, 7, 8 and 10) as channels to be buffered (S110).

Then, if the channels to be buffered are set as user preferred channels (e.g., Channels 1, 2, 7, 8 and 10) and assuming that bi-directional buffering is used, the controller 180 buffers upper and lower adjacent channels (i.e., Channels 2 and 8 of the current broadcast channel (e.g., Channel 7) (S120). Also, when the user enters a channel up or channel down command (S130 and S140), the controller 180 changes the current broadcast channel (i.e., Channel 7) which the user is watching to the corresponding upper or lower channel (i.e., its preceding or succeeding channel) (S150 or S160).

In addition, when the user enters the channel up command in step S140, the controller 180 displays the pre-buffered broadcast data of Channel 2 while the broadcast channel is changed from Channel 7 to Channel 2 (S150). Afterwards, when the broadcast channel is completely changed from Channel 7 to Channel 2, the buffering of Channels 1 and 7 are started (S170).

Further, the user preferred channels may refer to channels that the user prefers to watch or may refer to channels which have not been deleted by the user, namely, channels that the user decided not to delete during a channel set up or channels which the user frequently watches.

### Channel Change considering Channel type (genre)

Further, in step S20 in FIG. 4, the user can set channels to buffer using genres (or types) of channels. That is, channels can be classified according to genre, such as drama, sports, news, entertainment, music and the like, and accordingly, one or more channels belonging to the same genre may be buffered.

Also, if drama channels (e.g., Channels 2, 4, 6, 9 and 11) are set as the channels to be buffered and assuming that bi-directional buffering is used, the controller 180 buffers the upper and lower adjacent channels (e.g., Channels 4 and 9) with respect to the current channel being broadcast (e.g., Channel 6). When the user enters a channel change command (e.g., change to lower channel), the controller 180 changes the currently viewed broadcast channel (i.e., Channel 6) to the lower channel (e.g., Channel 9).

In addition, while the broadcast channel is changed from Channel 6 to Channel 9, the controller 180 displays the previously buffered broadcast data of Channel 9. After the broadcast channel is completely converted from Channel 6 to Channel 9, the buffering of Channels 6 and 11 is started.

### Channel Change considering viewing authorization

Also, in step S20 in FIG. 4, the user can set particular channels that require permission or authorization to watch, for example, free (or no cost) channels (e.g., basic channels or the like), age-restricted channels, pay-per-view channels, channels with reception quality sufficient for viewing excluding channels with low reception quality, and the like, as the channels to be buffered.

Then, if free channels (e.g., 1, 2, 4, 5, 6, 9 and 10) are set to be buffered at step S20, the controller 180 can perform channel change operations by targeting the free channels (e.g., 1, 2, 4, 5, 6, 9 and 10) and start buffering their contents. If age-restricted channels are set to be buffered at step S20, the controller 180 can perform the channel change operation by using the user's age. For example, if the user is a minor (e.g., under age 17), the controller 180 can perform the channel change and channel content buffering operations by targeting only those channels that have been authorized for viewing by minors.

Also, if pay-per-view or paid channels are set to be buffered at step S20, the controller 180 can perform the channel change and buffering operations by targeting only those channels that the user has paid for. The permission to view paid channels can be obtained in a variety of ways, such as by making a financial transaction, by accumulation of redeemable points, or the like.

If channels with a relatively high reception quality are set to be buffered at step S20, the controller 180 first considers or detects the reception quality of each channel and then performs the channel change and buffering operations by targeting only those channels with a reception quality that is higher than a reference value. Thus, by excluding channels with a low reception quality from the target channels to be buffered, unnecessary consumption of communication resources and a waste of user's time in channel searching can be avoided.

### Channel Change considering User's Channel Number Input

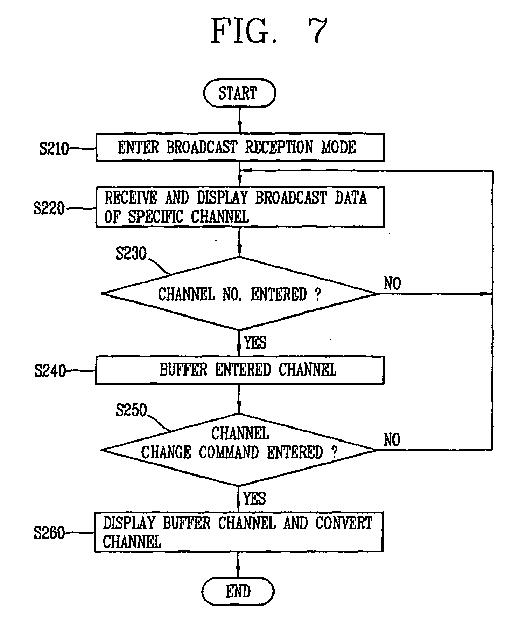

Next, FIG. 7 is a flowchart illustrating a method of changing channels in a mobile terminal according to another embodiment of the present invention. For the condition that there are several tens or hundreds of channels that may be broadcast and received, when the user wants to change a current broadcast channel (e.g., Channel 2) to Channel 52, the user needs to skip over numerous channels (i.e., by continuously pressing the channel button) to reach the desired channel.

Therefore, to solve this inconvenience, the present embodiment is implemented such that when the user enters a desired channel number, the contents of the entered channel number is buffered to allow a fast channel change operation. Also, in this embodiment, when the mobile terminal enters a broadcast reception mode (S210), broadcast data of a channel (e.g., Channel 5) that was most currently viewed is received and displayed (S220). Further, similar to the other embodiments, the user can activate a channel buffering setup screen or other user interactive image regardless of whether their mobile terminal enters the broadcast reception mode, so as to set the channels to be buffered.

Then, as shown in FIG. 7, when the user enters channel number 52 to change the current broadcast channel (e.g., Channel 2) to a channel (e.g., Channel 52) that he or she wants to view (Yes in S230), the controller 180 starts buffering the contents of the entered channel without performing the channel change operation (S240).

Also, when the user then enters a channel change command (e.g., a channel conversion key) (Yes in S250), the controller 180 converts the current broadcast channel (e.g., Channel 2) that the user is currently watching to Channel 52. In addition, while the broadcast channel is converted from Channel 2 into Channel 52, the controller 180 displays the buffered broadcast data of Channel 52 (S260). Thus, the mobile terminal according to this embodiment of the present invention can perform an improved channel change operation whereby the user will notice minimal delay time while a channel is being changed.

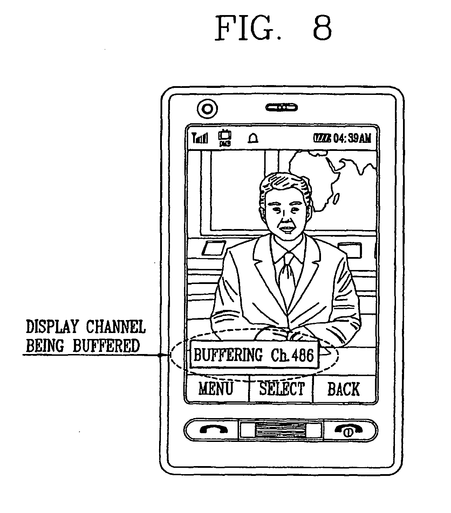

Next, FIG. 8 is an overview illustrating a screen of a mobile terminal according to an embodiment of the present invention. As illustrated in FIG. 8, the controller 180 displays contents of the channel which is being buffered. Further, in the mode of setting a channel to be buffered as shown in FIG. 5, the user can set or release a function of displaying the contents of a channel which is being buffered. Upon setting or activating the function of displaying contents of the channel which is being buffered, the channel which is currently being buffered is displayed at one side on the screen of the mobile terminal as illustrated in FIG. 8. Further, a concurrent display of multiple channels may be implemented in a variety of ways, such as using picture-in-picture (PIP) techniques, displaying in split-screen images, using overlapping windows, or the like.

Thus, one embodiment of the present invention allows one or more channels being buffered to be displayed on the screen. Through such displaying processes, the user can easily recognize the channel(s) being currently buffered. That is, the user can actually see or preview the contents of the channel currently being buffered and thus the user can more easily decide whether a channel change should be made.

In addition, the channel being currently buffered may be displayed in a visually distinguished manner, such as by being emphasized with distinct colors or specific effects (e.g., highlighting, flickering, animation, neon-sign graphics, or the like) which can attract the user's attention.

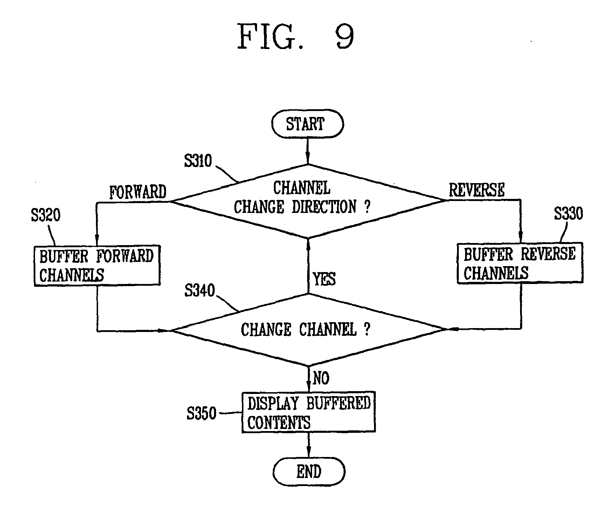

In addition, in an alternative embodiment as shown in FIG. 9, the present invention automatically buffers particular channels without user intervention. For example, in one embodiment, the controller 180 determines that the user is changing channels in a forward direction, and thus automatically buffers channels in the forward direction. A similar concept applies to the user changing channels in the reverse direction.

In more detail, and as shown in FIG. 9, the controller 180 determines the direction that the user is changing channels to (S310). When the controller 180 determines the user is changing channels in the forward direction, the controller buffers channels in the forward direction that are adjacent to the current channel the user has switched to (S320). Also, when the controller 180 determines the user is changing channels in the reverse direction, the controller buffers channels in the reverse direction that are adjacent to the current channel the user has switched to (S330).

Also, the controller 180 determines if the user continues to change the channels or stops changing channels to view a particular broadcast program (S340). When the user pauses or stops to watch a broadcast program (No in S340), the controller 180 displays the corresponding broadcast program (S350). When the user continues to change channels (Yes in S340), the step S310 is repeated.

Thus, because the user generally scans through channels in a forward or reverse direction when looking for a particular channel to watch, and may stop at a particular channel to watch a small portion of the program and then continue to the next channel, the present invention advantageously determines the direction the user is changing channels and automatically buffers adjacent channels in the same direction.

For example, when the user is switching channels in the forward direction and is currently on channel 6, the controller 180 advantageously automatically buffers channels 7 and 8. When the user is changing channels in the reverse direction, the controller 180 buffers channels 4 and 5 when the user is on channel 6. In addition, similar to the other embodiments discussed above, when the user has completely changed to a particular channel, the buffering operation is restarted (e.g., the next two adjacent channels are buffered)

As described above, embodiments of the present invention relate to buffering channels that are set as user preferred channels, which allow a fast channel change operation while receiving broadcast signals, and the buffered contents may also be previewed by the user. Further, a separate mode of setting the channels to be buffered is provided, and thus a mobile terminal capable of performing a fast channel change operation that minimizes the channel change delays noticed by the user can be achieved.

In addition, the above various embodiments may be implemented in a computer-readable medium using, for example, computer software, hardware, or some combination thereof. For a hardware implementation, the embodiments described above may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a selective combination thereof.

For a software implementation, the embodiments described herein may be implemented with separate software modules, such as procedures and functions, each of which perform one or more of the functions and operations described herein. The software codes can be implemented with a software application written in any suitable programming language and may be stored in memory (for example, the memory 160), and executed by a controller or processor (for example, the controller 180).

In addition, the mobile terminal 100 may be implemented in a variety of different configurations. Examples of such configurations include a folder-type, slide-type, bar-type, rotational-type, swing-type and combinations thereof. The mobile terminal may also be different types of electronic devices such as mobile phones, smart phones, notebook computers, digital broadcast terminals, personal digital assistants (PDAs), portable multimedia players (PMP), navigation devices, etc.

## Claims

1. A mobile terminal (100), comprising:
an input unit (120, 130) configured to:
- enter a broadcast mode so as to display a broadcast program on a first broadcast channel,
- receive an activation, by a user, of a channel buffering setup screen to be displayed in a display unit (151) before or regardless of whether the mobile terminal is configured to enter the broadcast reception mode, and
- receive in the channel buffering setup screen, by the user, a setting of a second broadcast channel to be buffered, the second broadcast channel being different from the first broadcast channel, and the channel buffering setup screen comprising a plurality of check boxes so as to set the second broadcast channel to buffer,
wherein the second broadcast channel includes user-preferred broadcast channels or
wherein the second broadcast channel includes broadcast channels based on a genre;
a buffering unit (180) configured to buffer a broadcast program on the second broadcast channel; and
the display unit (151) configured to display, upon setting in the channel buffering setup screen while the number of the second broadcast channel currently being buffered is displayed at one side on the display unit, the buffered broadcast program on the second broadcast channel when a channel change command is entered on the input unit (120) for changing the first broadcast channel to the second broadcast channel,
wherein
the buffering unit (180) is further configured to detect a reception quality of the second broadcast channel and to buffer the second broadcast channel only if its reception quality is higher than a reference value.

2. The mobile terminal (100) of claim 1, wherein the second broadcast channel includes at least one of 1) broadcast channels in a forward direction from the first broadcast channel, 2) broadcast channels in a reverse direction from the first broadcast channel, and 3) broadcast channels in the forward and reverse directions from the first broadcast channel.

3. The mobile terminal (100) of claim 2, wherein when the channel change command is in the forward direction changing the first broadcast channel to the second broadcast channel, the buffering unit is further configured to buffer broadcast programs in the forward direction from the second broadcast channel, and when the channel change command is in the reverse direction changing the first broadcast channel to the second broadcast channel, the buffering unit is further configured to buffer broadcast programs in the reverse direction from the second broadcast channel.

4. The mobile terminal (100) of claim 1, wherein the buffering unit is further configured to buffer broadcast programs respectively corresponding to the user-preferred broadcast channels that are upper and lower broadcast channels adjacent to the first broadcast channel, and
wherein the display unit is further configured to display the broadcast program corresponding to the lower adjacent user-preferred broadcast channel when the channel change command is a channel down command, and to display the broadcast program corresponding to the upper adjacent user-preferred broadcast channel when the channel change command is a channel up command.

5. The mobile terminal (100) of claim 1, wherein the second broadcast channel includes user-right broadcast channels that a user has a right to view based on an age limitation set for the second broadcast channel.

6. The mobile terminal (100) of claim 5, wherein the buffering unit is further configured to buffer broadcast programs respectively corresponding to the user-right broadcast channels that are upper and lower broadcast channels adjacent to the first broadcast channel, and
wherein the displaying unit is further configured to display the broadcast program corresponding to the lower adjacent user-right broadcast channel when the channel change command is a channel down command, and to display the broadcast program corresponding to the upper adjacent user-right broadcast channel when the channel change command is a channel up command.

7. A method of controlling a mobile terminal (100), the method comprising:
entering (S10; S210) a broadcast mode so as to display a broadcast program on a first broadcast channel;
activating, by a user, a channel buffering setup screen to be displayed before or regardless of whether the mobile terminal enters the broadcast reception mode;
setting (S20), by the user, a second broadcast channel to be buffered in the channel buffering setup screen, the second broadcast channel being different from the first broadcast channel, and the channel buffering setup screen comprising a plurality of check boxes so as to set the second broadcast channel to buffer,
wherein the second broadcast channel includes user-preferred broadcast channels or
wherein the second broadcast channel includes broadcast channels based on a genre set by the check boxes in the channel buffering setup screen,
buffering (S30; S240) a broadcast program on the second broadcast channel; and
upon setting in the channel buffering setup screen while the number of the second broadcast channel currently being buffered is displayed at one side on a display unit (151), displaying (S60; S260) the buffered broadcast program on the second broadcast channel when a channel change command is entered for changing the first broadcast channel to the second broadcast channel,
wherein the buffering includes detecting a reception quality of the second broadcast channel and buffering the second broadcast channel only if its reception quality is higher than a reference value.

8. The method of claim 7, wherein the second broadcast channel includes at least one of 1) broadcast channels in a forward direction from the first broadcast channel, 2) broadcast channels in a reverse direction from the first broadcast channel, and 3) broadcast channels in the forward and reverse directions from the first broadcast channel.

9. The method of claim 8, wherein when the channel change command is in the forward direction changing the first broadcast channel to the second broadcast channel, the buffering step buffers broadcast programs in the forward direction (S320) from the second broadcast channel, and when the channel change command is in the reverse direction changing the first broadcast channel to the second broadcast channel, the buffering step buffers broadcast programs in the reverse direction (S330) from the second broadcast channel.

10. The method of claim 7, wherein the buffering step buffers broadcast programs respectively corresponding to the user-preferred broadcast channels that are upper and lower broadcast channels adjacent to the first broadcast channel, and
wherein the displaying step displays the broadcast program corresponding to the lower adjacent user-preferred broadcast channel when the channel change command is a channel down command, and displays the broadcast program corresponding to the upper adjacent user-preferred broadcast channel when the channel change command is a channel up command.

11. The method of claim 7, wherein the second broadcast channel includes user-right broadcast channels that a user has a right to view based on an age limitation set for the second broadcast channel.

12. The method of claim 11, wherein the buffering step buffers broadcast programs respectively corresponding to the user-right broadcast channels that are upper and lower broadcast channels adjacent to the first broadcast channel, and
wherein the displaying step displays the broadcast program corresponding to the lower adjacent user-right broadcast channel when the channel change command is a channel down command, and displays the broadcast program corresponding to the upper adjacent user-right broadcast channel when the channel change command is a channel up command.

## Patentansprüche

1. Mobiles Endgerät (100), aufweisend:
eine Eingabeeinheit (120, 130), die konfiguriert ist zum:
- Eingeben eines Rundfunkmodus, um ein Rundfunkprogramm auf einem ersten Rundfunkkanal anzuzeigen,
- Empfangen durch einen Teilnehmer einer Aktivierung eines Kanalpufferungs-Einstellungsbildschirms, der auf einer Anzeigeeinheit (151) anzuzeigen ist, bevor oder unabhängig davon, ob das mobile Endgerät dazu konfiguriert ist, in den Rundfunkempfangsmodus zu gehen, und
- Empfangen durch den Teilnehmer im Kanalpufferungs-Einstellungsbildschirm einer Einstellung eines zweiten zu puffernden Rundfunkkanals, wobei der zweite Rundfunkkanal verschieden vom ersten Rundfunkkanal ist, und der Kanalpufferungs-Einstellungsbildschirm eine Mehrzahl Markierfelder, um den zweiten zu puffernden Rundfunkkanal einzustellen, aufweist,
wobei der zweite Rundfunkkanal vom Teilnehmer bevorzugte Rundfunkkanäle enthält, oder
wobei der zweite Rundfunkkanal Rundfunkkanäle auf Basis einer Kategorie enthält;
eine Pufferungseinheit (180), die zum Puffern eines Rundfunkprogramms auf dem zweiten Rundfunkkanal konfiguriert ist; und
die Anzeigeeinheit (151) dazu konfiguriert ist, bei Einstellung im Kanalpufferungs-Einstellungsbildschirm, während die Nummer des aktuell gepufferten zweiten Rundfunkkanals an einer Seite der Anzeigeeinheit angezeigt wird, das gepufferte Rundfunkprogramm auf dem zweiten Rundfunkkanal anzuzeigen, wenn ein Kanaländerungsbefehl auf der Eingabeeinheit (120) eingegeben wird, um den ersten Rundfunkkanal zum zweiten Rundfunkkanal zu ändern,
wobei
die Pufferungseinheit (180) ferner dazu konfiguriert ist, die Empfangsqualität des zweiten Rundfunkkanals zu erkennen und den zweiten Rundfunkkanal nur zu puffern, wenn seine Empfangsqualität höher ist als ein Referenzwert.

2. Mobiles Endgerät (100) nach Anspruch 1, bei dem der zweite Rundfunkkanal mindestens entweder 1) Rundfunkkanäle in Vorwärtsrichtung vom ersten Rundfunkkanal aus, 2) Rundfunkkanäle in Rückwärtsrichtung vom ersten Rundfunkkanal aus oder 3) Rundfunkkanäle in Vorwärts- und Rückwärtsrichtung vom ersten Rundfunkkanal aus aufweist.

3. Mobiles Endgerät (100) nach Anspruch 2, bei dem dann, wenn der Kanaländerungsbefehl den ersten Rundfunkkanal in Vorwärtsrichtung zum zweiten Rundfunkkanal ändert, die Pufferungseinheit ferner dazu konfiguriert ist, Rundfunkkanäle in Vorwärtsrichtung vom zweiten Rundfunkkanal aus zu puffern, und wenn der Kanaländerungsbefehl den ersten Rundfunkkanal in Rückwärtsrichtung zum zweiten Rundfunkkanal ändert, die Pufferungseinheit ferner dazu konfiguriert ist. Rundfunkprogramme in Rückwärtsrichtung vom zweiten Rundfunkkanal aus zu puffern.

4. Mobiles Endgerät (100) nach Anspruch 1, bei dem die Pufferungseinheit ferner dazu konfiguriert ist, Rundfunkprogramme zu puffern, die jeweils den vom Teilnehmer bevorzugten Rundfunkkanälen entsprechen, bei denen es sich um höhere und niedrigere Rundfunkkanäle neben dem ersten Rundfunkkanal handelt, und
bei dem die Anzeigeeinheit ferner dazu konfiguriert ist, das Rundfunkprogramm entsprechend dem niedrigeren benachbarten vom Teilnehmer bevorzugten Rundfunkkanal anzuzeigen, wenn der Kanaländerungsbefehl ein Kanalabwärtsbefehl ist, und das Rundfunkprogramm entsprechend dem höheren benachbarten vom Teilnehmer bevorzugten Rundfunkkanal anzuzeigen, wenn der Kanaländerungsbefehl ein Kanalaufwärtsbefehl ist.

5. Mobiles Endgerät (100) nach Anspruch 1, bei dem der zweite Rundfunkkanal teilnehmerberechtigte Rundfunkkanäle enthält, zu deren Betrachtung der Teilnehmer auf Basis einer Altergrenze, die für den zweiten Rundfunkkanal eingestellt ist, berechtigt ist.

6. Mobiles Endgerät (100) nach Anspruch 5, bei dem die Pufferungseinheit ferner dazu konfiguriert ist, Rundfunkprogramme zu puffern, die jeweils den teilnehmerberechtigen Rundfunkkanälen entsprechen, bei denen es sich um höhere und niedrigere Rundfunkkanäle neben dem ersten Rundfunkkanal handelt, und
bei dem die Anzeigeeinheit ferner dazu konfiguriert ist, das Rundfunkprogramm entsprechend dem niedrigeren benachbarten teilnehmerberechtigten Rundfunkkanal anzuzeigen, wenn der Kanaländerungsbefehl ein Kanalabwärtsbefehl ist, und das Rundfunkprogramm entsprechend dem höheren benachbarten teilnehmerberechtigten Rundfunkkanal anzuzeigen, wenn der Kanaländerungsbefehl ein Kanalaufwärtsbefehl ist.

7. Verfahren zum Steuern eines mobilen Endgeräts (100), wobei das Verfahren aufweist:
Eingeben (S10; S210) eines Rundfunkmodus, um ein Rundfunkprogramm auf einem ersten Rundfunkkanal anzuzeigen;
Aktivieren durch einen Teilnehmer eines Kanalpufferungs-Einstellungsbildschirms, der anzuzeigen ist, bevor oder unabhängig davon, ob das mobile Endgerät in den Rundfunkempfangsmodus geht;
Einstellen (S20) durch den Teilnehmer eines zweiten zu puffernden Rundfunkkanals im Kanalpufferungs-Einstellungsbildschirm, wobei der zweite Rundfunkkanal verschieden vom ersten Rundfunkkanal ist, und der Kanalpufferungs-Einstellungsbildschirm eine Mehrzahl Markierfelder aufweist, um den zweiten zu puffernden Rundfunkkanal einzustellen,
wobei der zweite Rundfunkkanal vom Teilnehmer bevorzugte Rundfunkkanäle enthält, oder
wobei der zweite Rundfunkkanal Rundfunkkanäle auf Basis einer in den Markierfeldern im Kanalpufferungs-Einstellungsbildschirm eingestellten Kategorie enthält; und
bei Einstellung im Kanalpufferungs-Einstellungsbildschirm, während die Nummer des aktuell gepufferten zweiten Rundfunkkanals an einer Seite einer Anzeigeeinheit (151) angezeigt wird, Anzeigen (S60; S260) des gepufferte Rundfunkprogramms auf dem zweiten Rundfunkkanal, wenn ein Kanaländerungsbefehl zum Ändern des ersten Rundfunkkanals zum zweiten Rundfunkkanal eingegeben wird,
wobei das Puffern die Detektion der Empfangsqualität des zweiten Rundfunkkanals enthält und der zweite Rundfunkkanal nur gepuffert wird, wenn seine Empfangsqualität höher ist als ein Referenzwert.

8. Verfahren nach Anspruch 7, bei dem der zweite Rundfunkkanal mindestens entweder 1) Rundfunkkanäle in Vorwärtsrichtung vom ersten Runkfunkkanal aus, 2) Rundfunkkanäle in Rückwärtsrichtung vom ersten Rundfunkkanal aus oder 3) Rundfunkkanäle in Vorwärts- und Rückwärtsrichtung vom ersten Rundfunkkanal aus enthält.

9. Verfahren nach Anspruch 8, bei dem dann, wenn der Kanaländerungsbefehl den ersten Rundfunkkanal in Vorwärtsrichtung zum zweiten Rundfunkkanal ändert, der Pufferungsschritt Rundfunkkanäle in Vorwärtsrichtung vom zweiten Rundfunkkanal puffert (S320), und wenn der Kanaländerungsbefehl den ersten Rundfunkkanal in Rückwärtsrichtung zum zweiten Rundfunkkanal ändert, der Pufferungsschritt Rundfunkprogramme in Rückwärtsrichtung vom zweiten Rundfunkkanal aus puffert (S330).

10. Verfahren nach Anspruch 7, bei dem der Pufferungsschritt Rundfunkprogramme puffert, die jeweils den vom Teilnehmer bevorzugten Rundfunkkanälen entsprechen, bei denen es sich um höhere und niedrigere Rundfunkkanäle neben dem ersten Rundfunkkanal handelt, und bei dem der Anzeigeschritt das Rundfunkprogramm entsprechend dem niedrigeren benachbarten vom Teilnehmer bevorzugten Rundfunkkanal anzeigt, wenn der Kanaländerungsbefehl ein Kanalabwärtsbefehl ist, und das Rundfunkprogramm entsprechend dem höheren benachbarten vom Teilnehmer bevorzugten Rundfunkkanal anzeigt, wenn der Kanaländerungsbefehl ein Kanalaufwärtsbefehl ist.

11. Verfahren nach Anspruch 7, bei dem der zweite Rundfunkkanal teilnehmerberechtigte Rundfunkkanäle enthält, zu deren Betrachtung der Teilnehmer auf Basis einer Altergrenze, die für den zweiten Rundfunkkanal eingestellt ist, berechtigt ist.

12. Verfahren nach Anspruch 11, bei dem der Pufferungsschritt Rundfunkprogramme puffert, die jeweils den teilnehmerberechtigen Rundfunkkanälen entsprechen, bei denen es sich um höhere und niedrigere Rundfunkkanäle neben dem ersten Rundfunkkanal handelt, und bei dem der Anzeigeschritt das Rundfunkprogramm entsprechend dem niedrigeren benachbarten teilnehmerberechtigten Rundfunkkanal anzeigt, wenn der Kanaländerungsbefehl ein Kanalabwärtsbefehl ist, und das Rundfunkprogramm entsprechend dem höheren benachbarten teilnehmerberechtigten Rundfunkkanal anzeigt, wenn der Kanaländerungsbefehl ein Kanalaufwärtsbefehl ist.

## Revendications

1. Terminal mobile (100), comprenant :
une unité d'entrée (120, 130) configurée pour :
- passer en un mode de diffusion de manière à afficher un programme de diffusion sur un premier canal de diffusion,
- recevoir une activation, par un utilisateur, d'un écran de réglage de mise en tampon de canal destiné à être affiché dans une unité d'affichage (151) avant ou sans prendre en compte que le terminal mobile soit configuré pour passer en mode de réception de diffusion, et
- recevoir dans l'écran de réglage de mise en tampon de canal, par l'utilisateur, une mise en place d'un deuxième canal de diffusion devant être mis en tampon, le deuxième canal de diffusion étant différent du premier canal de diffusion, et l'écran de réglage de mise en tampon de canal comprenant une pluralité de cases à cocher de façon à mettre en place le deuxième canal de diffusion dans le tampon,
dans lequel le deuxième canal de diffusion inclut des canaux de diffusion préférés par l'utilisateur ou
dans lequel le deuxième canal de diffusion inclut des canaux de diffusion basés sur un genre ;
une unité de mise en tampon (180) configurée pour mettre en tampon un programme de diffusion sur le deuxième canal de diffusion ; et
l'unité d'affichage (151) configurée pour afficher, lors de la mise en place dans l'écran de réglage de mise en tampon de canal tandis que le numéro du deuxième canal de diffusion étant actuellement mis en tampon est affiché sur un côté de l'unité d'affichage, le programme de diffusion mis en tampon sur le deuxième canal de diffusion lorsqu'une commande de changement de canal est entrée sur l'unité d'entrée (120) pour passer du premier canal de diffusion au deuxième canal de diffusion,
dans lequel
l'unité de mise en tampon (180) est en outre configurée pour détecter une qualité de réception du deuxième canal de diffusion et pour ne mettre en tampon le deuxième canal de diffusion que si sa qualité de réception est supérieure à une valeur de référence.

2. Terminal mobile (100) selon la revendication 1, dans lequel le deuxième canal de diffusion inclut au moins un de 1) canaux de diffusion dans un sens vers l'avant par rapport au premier canal de diffusion, 2) canaux de diffusion dans un sens vers l'arrière par rapport au premier canal de diffusion, et 3) canaux de diffusion dans les sens vers l'avant et vers l'arrière par rapport au premier canal de diffusion.

3. Terminal mobile (100) selon la revendication 2, dans lequel, lorsque la commande de changement de canal est dans le sens vers l'avant en passant du premier canal de diffusion au deuxième canal de diffusion, l'unité de mise en tampon est en outre configurée pour mettre en tampon des programmes de diffusion dans le sens vers l'avant par rapport au deuxième canal de diffusion, et lorsque la commande de changement de canal est dans le sens vers l'arrière en passant du premier canal de diffusion au deuxième canal de diffusion, l'unité de mise en tampon est en outre configurée pour mettre en tampon des programmes de diffusion dans le sens vers l'arrière par rapport au deuxième canal de diffusion.

4. Terminal mobile (100) selon la revendication 1, dans lequel l'unité de mise en tampon est en outre configurée pour mettre en tampon des programmes de diffusion correspondant respectivement aux canaux de diffusion préférés par l'utilisateur qui sont des canaux de diffusion supérieur et inférieur adjacents au premier canal de diffusion, et
dans lequel l'unité d'affichage est en outre configurée pour afficher le programme de diffusion correspondant au canal de diffusion préféré par l'utilisateur adjacent inférieur lorsque la commande de changement de canal est une commande de canal précédent, et pour afficher le programme de diffusion correspondant au canal de diffusion préféré par l'utilisateur adjacent supérieur lorsque la commande de changement de canal est une commande de canal suivant.

5. Terminal mobile (100) selon la revendication 1, dans lequel le deuxième canal de diffusion inclut des canaux de diffusion avec droits d'utilisateur qu'un utilisateur à le droit de voir sur la base d'une limitation d'âge fixée pour le deuxième canal de diffusion.

6. Terminal mobile (100) selon la revendication 5, dans lequel l'unité de mise en tampon est en outre configurée pour mettre en tampon des programmes de diffusion correspondant respectivement aux canaux de diffusion avec droits d'utilisateur qui sont des canaux de diffusion supérieur et inférieur adjacents au premier canal de diffusion, et
dans lequel l'unité d'affichage est en outre configurée pour afficher le programme de diffusion correspondant au canal de diffusion avec droits d'utilisateur adjacent inférieur lorsque la commande de changement de canal est une commande de canal précédent, et pour afficher le programme de diffusion correspondant au canal de diffusion avec droits d'utilisateur adjacent supérieur lorsque la commande de changement de canal est une commande de canal suivant.

7. Procédé de commande d'un terminal mobile (100), le procédé comprenant :
le passage (S10 ; S210) en un mode de diffusion de manière à afficher un programme de diffusion sur un premier canal de diffusion ;
l'activation, par un utilisateur, d'un écran de réglage de mise en tampon de canal destiné à être affiché avant ou sans prendre en compte que le terminal mobile passe en mode de réception de diffusion ;
la mise en place (S20), par l'utilisateur, d'un deuxième canal de diffusion devant être mis en tampon dans l'écran de réglage de mise en tampon de canal, le deuxième canal de diffusion étant différent du premier canal de diffusion, et l'écran de réglage de mise en tampon de canal comprenant une pluralité de cases à cocher de façon à mettre en place le deuxième canal de diffusion dans le tampon,
dans lequel le deuxième canal de diffusion inclut des canaux de diffusion préférés par l'utilisateur ou
dans lequel le deuxième canal de diffusion inclut des canaux de diffusion basés sur un genre fixé par les cases à cocher dans l'écran de réglage de mise en tampon de canal,
la mise en tampon (S30 ; S240) d'un programme de diffusion sur le deuxième canal de diffusion ; et
lors de la mise en place dans l'écran de réglage de mise en tampon de canal tandis que le numéro du deuxième canal de diffusion étant actuellement mis en tampon est affiché sur un côté d'une unité d'affichage (151), l'affichage (S60 ; S260) du programme de diffusion mis en tampon sur le deuxième canal de diffusion lorsqu'une commande de changement de canal est entrée pour passer du premier canal de diffusion au deuxième canal de diffusion,
dans lequel la mise en tampon inclut la détection d'une qualité de réception du deuxième canal de diffusion et la mise en tampon du deuxième canal de diffusion uniquement si sa qualité de réception est supérieure à une valeur de référence.

8. Procédé selon la revendication 7, dans lequel le deuxième canal de diffusion inclut au moins un de 1) canaux de diffusion dans un sens vers l'avant par rapport au premier canal de diffusion, 2) canaux de diffusion dans un sens vers l'arrière par rapport au premier canal de diffusion, et 3) canaux de diffusion dans les sens vers l'avant et vers l'arrière par rapport au premier canal de diffusion.

9. Procédé selon la revendication 8, dans lequel, lorsque la commande de changement de canal est dans le sens vers l'avant en passant du premier canal de diffusion au deuxième canal de diffusion, l'étape de mise en tampon met en tampon des programmes de diffusion dans le sens vers l'avant (S320) par rapport au deuxième canal de diffusion, et lorsque la commande de changement de canal est dans le sens vers l'arrière en passant du premier canal de diffusion au deuxième canal de diffusion, l'étape de mise en tampon met en tampon des programmes de diffusion dans le sens vers l'arrière (S330) par rapport au deuxième canal de diffusion.

10. Procédé selon la revendication 7, dans lequel l'étape de mise en tampon met en tampon des programmes de diffusion correspondant respectivement aux canaux de diffusion préférés par l'utilisateur qui sont des canaux de diffusion supérieur et inférieur adjacents au premier canal de diffusion, et
dans lequel l'étape d'affichage affiche le programme de diffusion correspondant au canal de diffusion préféré par l'utilisateur adjacent inférieur lorsque la commande de changement de canal est une commande de canal précédent, et affiche le programme de diffusion correspondant au canal de diffusion préféré par l'utilisateur adjacent supérieur lorsque la commande de changement de canal est une commande de canal suivant.

11. Procédé selon la revendication 7, dans lequel le deuxième canal de diffusion inclut des canaux de diffusion avec droits d'utilisateur qu'un utilisateur à le droit de voir sur la base d'une limitation d'âge fixée pour le deuxième canal de diffusion.

12. Procédé selon la revendication 11, dans lequel l'étape de mise en tampon met en tampon des programmes de diffusion correspondant respectivement aux canaux de diffusion avec droits d'utilisateur qui sont des canaux de diffusion supérieur et inférieur adjacents au premier canal de diffusion, et
dans lequel l'étape d'affichage affiche le programme de diffusion correspondant au canal de diffusion avec droits d'utilisateur adjacent inférieur lorsque la commande de changement de canal est une commande de canal précédent, et affiche le programme de diffusion correspondant au canal de diffusion avec droits d'utilisateur adjacent supérieur lorsque la commande de changement de canal est une commande de canal suivant.
